Europäisches Patentamt

European Patent Office

Office européen des brevets

(19)

(11) Veröffentlichungsnummer: **0 000 360**
**A1**

(12) # EUROPÄISCHE PATENTANMELDUNG

(21) Anmeldenummer: 78100282.9

(22) Anmeldetag: 30.06.78

(51) Int. Cl.²: **C08G18/10**, C08G18/32, C08G18/75

(30) Priorität: 14.07.77 DE 2731815

(43) Veröffentlichungstag der Anmeldung: 24.01.79 Patentblatt 79/2

(84) Benannte Vertragsstaaten: **BE DE FR GB**

(71) Anmelder: **BASF Aktiengesellschaft, Carl-Bosch-Strasse 38, D-6700 Ludwigshafen (DE)**

(72) Erfinder: **Stutz, Herbert, Dr., Schneidemuehler Strasse 90, D-7500 Karlsruhe (DE)**
**Illers, Karl Heinz, Dr., Huttenstrasse 20, D-6701 Otterstadt (DE)**
**Schuster, Ludwig, Dr., Weinheimer Strasse 44, D-6703 Limburgerhof (DE)**

(54) Polyurethan-Harnstoff-Elastomere und Verfahren zu deren Herstellung.

(57) Polyurethan-Harnstoff-Elastomere mit verbessertem Temperaturverhalten, insbesondere Tieftemperatureigenschaften, guten mechanischen Eigenschaften über einen grossen Temperaturbereich und hervorragender Hydrolysenbeständigkeit werden erhalten durch Umsetzung

A) eines cycloaliphatische NCO-Gruppen aufweisenden Präpolymeren, hergestellt aus im wesentlichen difunktionellen Polyhydroxyverbindungen und organischen Diisocyanaten mit mindestens einer cycloaliphatisch gebundenen NCO-Gruppe im Verhältnis von Gesamt-Hydroxyl : NCO-Gruppen von 1 : 1,2 bis 1 : 10 mit

B) 3,3',5,5'-Tetramethyl-4,4'-diamino-diphenylmethan im Molverhältnis von 1 : 0,8 bis 1 : 1,2.

Die Polyurethan-Harnstoff-Elastomere eignen sich zur Herstellung von Maschinenteilen, Rollen, Walzen und Dichtungselementen.

BASF Aktiengesellschaft                    O.Z. 32 685


Polyurethan-Harnstoff-Elastomere und Verfahren zu deren
Herstellung


Die Erfindung betrifft Polyurethan-Harnstoff-Elastomere mit verbessertem Temperaturverhalten, hergestellt auf Basis von cycloaliphatisch gebundenen NCO-Gruppen aufweisenden Präpolymeren und 3,3',5,5'-Tetramethyl-4,4'diamino-diphenylmethan und ein Verfahren zu deren Herstellung.


Die Herstellung von Polyurethan-Harnstoff-Elastomeren durch Umsetzung eines Präpolymeren mit endständigen Isocyanatgruppen mit ungefähr äquivalenten Mengen an Diaminen ist seit langem bekannt. Von den zu diesem Zweck brauchbaren wenig reaktiven aromatischen Diaminen hat sich vor allem das unter der Bezeichnung ®Moca im Handel befindliche 3,3'-Dichlor-4,4'-diamino-diphenylmethan bewährt, da die damit hergestellten Elastomeren ein besonders ausgewogenes Eigenschaftsbild aufweisen.


Da Polyurethan-Harnstoff-Elastomere als technische Werkstoffe in vielen Gebieten eingesetzt werden, ist ihr Verhalten sowohl bei hohen als auch bei tiefen Temperaturen von entscheidender Bedeutung für ihre Brauchbarkeit. Der Gebrauchstemperaturbereich eines elastomeren Werkstoffs wird dabei überwiegend von der Temperaturabhängigkeit des Moduls im kaut-


192/77   M

schukelastischen Bereich bestimmt, der nach unten durch das Einfrieren und nach oben durch das Erweichen und Wegschmelzen des Werkstoffs eingegrenzt wird. Moca-gehärtete Elastomere zeichnen sich dabei vor allem durch die geringe Temperaturabhängigkeit des Moduls zwischen ca. $-30^{\circ}$C und $130^{\circ}$C aus, der besonders zwischen Raumtemperatur und $130^{\circ}$C praktisch völlig temperaturunabhängig ist.

Seit vor einigen Jahren jedoch Moca im Tierversuch als cancerogen erkannt wurde, wurden allgemein viele Anstrengungen gemacht, Alternativen zu dem gefährlichen Moca aufzufinden. Dazu wurde eine Vielzahl von Möglichkeiten vorgeschlagen, die jedoch alle entweder zu teuer sind oder aber unbefriedigende Eigenschaften des ausgehärteten Materials ergeben. Sie zeigen dabei einen stärkeren Abfall des Moduls mit steigender Temperatur, so daß thermisch oder dynamisch belastete Teile frühzeitig ausfallen.

Es ist auch bereits vorgeschlagen worden, zur besseren Beherrschung der Reaktivität Präpolymere aus cycloaliphatischen Diisocyanaten mit aromatischen Diaminen zu härten. So beschreibt z.B. die US-PS 37 66 148 ein Verfahren zur Herstellung von Polyurethan-Elastomeren mit verbesserter Hydrolysestabilität aus 4,4'-Methylen-bis(cyclohexylisocyanat), einem Polyol und 4,4'-Diamino-diphenylmethan. Nach diesem Verfahren hergestellte Elastomere weisen zwar gute Hydrolysestabilitäten auf, sie sind jedoch durch einen starken und nahezu gleichmäßigen Abfall des Moduls über den ganzen Temperaturbereich zwischen $-50$ und $150^{\circ}$C gekennzeichnet. Ein Modulplateau in dem besonders wichtigen Bereich oberhalb Raumtemperatur wird bei diesem Elastomeren überhaupt nicht erreicht.

Es wurde nun gefunden. daß sich Polyurethan-Harnstoff-Elastomere herstellen lassen, welche die vorstehend beschriebenen Nachteile nicht aufweisen und im Bereich zwischen Raumtemperatur und ca. 130°C einen praktisch von der Temperatur unabhängigen Modul aufweisen, wenn Präpolymere mit cycloaliphatisch gebundenen Isocyanat-Endgruppen mit 3,3',5,5'-Tetramethyl-4,4'-diamino-diphenylmethan gehärtet werden.

Gegenstand der vorliegenden Erfindung sind Polyurethan-Harnstoff-Elastomere, hergestellt durch Umsetzung

A) eines endständig cycloaliphatisch gebundene NCO-Gruppen aufweisenden Präpolymeren, das seinerseits erhalten wird durch Reaktion von im wesentlichen difunktionellen Polyhydroxylverbindungen mit Molekulargewichten von 600 bis 10 000, gegebenenfalls niedermolekularen Polyhydroxylverbindungen mit Molekulargewichten unter 300 und organischen Diisocyanaten mit mindestens einer cycloaliphatisch gebundenen NCO-Gruppe im Verhältnis von Gesamt-OH : NCO-Gruppen von 1 : 1,2 bis 1 : 10, mit

B) 3,3',5,5'-Tetramethyl-4,4'-diamino-diphenylmethan im Molverhältnis von ungefähr 1 : 0,8 bis 1 : 1,2.

Ein anderer Gegenstand der Erfindung ist ein Verfahren zur Herstellung von Polyurethan-Harnstoff-Elastomeren, das dadurch gekennzeichnet ist, daß man

A) endständig cycloaliphatisch gebundene NCO-Gruppen aufweisende Präpolymere, erhalten durch Umsetzung überwiegend difunktioneller Polyhydroxylverbindungen mit endständigen Hydroxylgruppen und Molekulargewichten von ungefähr 600 bis 10 000 und gegebenenfalls niedermolekularen Polyhydroxylverbindungen mit Molekulargewichten unter 300 mit organischen Diisocyanaten, die mindestens eine cycloaliphatisch gebundene NCO-Gruppe besitzen, im Verhältnis von Gesamt-OH : NCO-Gruppen von ungefähr 1 : 1,2 bis 1 : 10 mit

B) 3,3',5,5'-Tetramethyl-4,4'-diamino-diphenylmethan in molaren Mengenverhältnissen von ungefähr 1 : 0,8 bis 1 : 1,2 miteinander vermischt, in Formen gießt und aushärten läßt.

Die erfindundungsgemäß hergestellten Polyurethan-Harnstoff-Elastomeren besitzen überraschenderweise ein stark verbessertes Temperaturverhalten.

Für die Herstellung der erfindungsgemäßen Polyurethane geeignete höhermolekulare Polyhydroxylverbindungen sind die nach dem Stand der Technik bekannten und üblichen Polyester, Polyesteramide, Polyäther, Polyacetale und/oder Butandienöle mit endständigen Hydroxylgruppen und Molekulargewichten zwischen 600 und 10 000, vorzugsweise von 800 bis 3 000. Vorzugsweise werden lineare, hydroxylgruppenhaltige Polyester und Polyäther verwendet. Die Polyhydroxylverbindungen müssen zumindest überwiegend linear, d.h. im Sinne der Isocyanatreaktion difunktionell aufgebaut sein. Werden höherfunktionelle Polyhydroxylverbindungen anteilmäßig mitverwendet, so können diese nur in solchen Mengen eingesetzt werden, daß die durchschnittliche Funktionalität der Mischung zwischen 2,0 und 2,2, vorzugsweise zwischen 2,0 und 2,1, liegt. Die genannten Polyhydroxylverbindungen können dabei sowohl als Einzelkomponenten oder in Form von Mischungen untereinander zur Anwendung gelangen.

Geeignete hydroxylgruppenhaltige Polyester bzw. Polyesteramide können beispielsweise aus Dicarbonsäuren mit 2 bis 12 Kohlenstoffatomen und mehrwertigen Alkoholen, gegebenenfalls unter Mitverwendung von Aminoalkoholen oder Diaminen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure sowie aromatische Dicarbonsäuren wie Phthalsäure,

BASF Aktiengesellschaft -5- 0000360

Isophthalsäure und Terephthalsäure. Die Dicarbonsäuren können dabei sowohl einzeln als auch im Gemisch untereinander verwendet werden. Vorzugsweise verwendet werden aliphatische Dicarbonsäuren wie Adipinsäure und Bernsteinsäure.

Zur Herstellung der hydroxylgruppenhaltigen Polyester kann es gegebenenfalls vorteilhaft sein, anstelle der freien Carbonsäuren die entsprechenden Carbonsäurederivate, wie Carbonsäureester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 16, vorzugsweise 2 bis 6 Kohlenstoffatomen wie Äthylenglykol, Diäthylenglykol, Butandiol-1,4, Pentandiol-1,5, Hexandiol-1,6, Decandiol-1,10, 2,2-Dimethylpropandiol-1,3, 2,2,4-Trimethylpropandiol-1,3, Propandiol-1,2 und -1,3, Di- und Tripropylenglykol. Je nach den gewünschten Eigenschaften können die mehrwertigen Alkohole allein oder gegebenenfalls in Mischungen untereinander oder mit geringen Mengen an Diaminen oder Aminoalkoholen wie Äthylendiamin, 1,4-Diaminobutan, Piperazin oder Äthanolamin verwendet werden. Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von $\omega$-Hydroxycarbonsäuren, beispielsweise $\omega$-Hydroxycapronsäure und vorzugsweise Polymerisationsprodukte von cyclischen Lactonen, beispielsweise gegebenenfalls substituierten $\varepsilon$-Caprolactonen.

Geeignete Polyäther mit endständigen Hydroxylgruppen können dadurch hergestellt werden, daß man ein oder mehrere Alkylenoxide mit 2 bis 4 Kohlenstoffatomen im Alkylenrest mit einem Startermolekül, das mehrere, vorzugsweise zwei aktive Wasserstoffatome gebunden enthält, umsetzt. Geeignete Alkylenoxide sind z.B. Äthylenoxid, Propylenoxid, Epichlorhydrin, 1,2- und 2,3-Butylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyldiäthanolamine und Diole, wie Äthylenglykol, Propylenglykol, Butandiol und Hexandiol. Geeignete Polyätherole sind ferner die hydroxylgruppenhaltigen Polymerisationsprodukte des Tetrahydrofurans. Die hydroxylgruppenhaltigen Polyäther sind ebenso wie die obengenannten Polyester überwiegend linear, d.h. difunktionell aufgebaut. Als Polyacetale kommen vor allem wasserunlösliche Formale wie Polybutandiolformal und Polyhexandiolformal in Betracht.

Gegegebenenfalls können im Gemisch mit den höhermolekularen Polyhydroxylverbindungen auch anteilmäßig niedermolekulare Polyhydroxylverbindungen mit Molekulargewichten unter 300, vorzugsweise zwischen 60 und 300, mitverwendet werden. Im allgemeinen sollten dabei die molaren Verhältnisse der höher- und niedermolekularen Polyhydroxylverbindungen einen Wert von ungefähr 1 : 1 nicht überschreiten, da sonst gegebenenfalls die Viskositäten leicht zu stark ansteigen können.Als Polyhydroxylverbindungen mit Molekulargewichten unter 300 seien beispielhaft genannt: Butandiol, Hexandiol, Di- und Triäthylenglykol und Di- und Tripropylenglykol.

Vorzugsweise verwendet werden Butandiol oder Diäthylenglykol.

Zur Herstellung der erfindungsgemäßen Polyurethan-Harnstoff-Elastomeren geeignete organische Diisocyanate müssen mindestens eine cycloaliphatisch gebundene Isocyanatgruppe im Molekül besitzen. In Betracht kommen beispielsweise Methylcyclohexyl-diisocyanate, wie 2,4- und 2,6-Methyl-cyclohexyldiisocyanat, Phenyl-cyclohexylmethan-diisocyanate und vorzugsweise die verschiedenen Isomeren des Dicyclohexylmethandiisocyanats und 3-Isocyanato-methyl-3,5,5-trimethylcyclo-hexylisocyanat (JPDJ). Gegebenenfalls können auch Gemische dieser Diisocyanate eingesetzt werden. Aliphatische Diisocanate sind für die Herstellung der erfindungsgemäßen Polyurethane nicht geeignet.

Die Umsetzung der höhermolekularen und gegebenenfalls niedermolekularen Polyhydroxylverbindungen mit dem organischen Diisocyanat oder gegebenenfalls mit mehreren der vorstehend
beschriebenen organischen Diisocyanate zu einem Präpolymeren
mit endständigen Isocyanatgruppen erfolgt in der bekannten
und üblichen Weise bei Temperaturen zwischen 80 und 150°C,
vorzugsweise von 80 bis 120°C. Falls es erwünscht ist, können zur Beschleunigung der Reaktion auch die bekannten und
üblichen Katalysatoren wie tertiäre Amine, Zinnverbindungen
und ähnliche mitverwendet werden.

Die molaren Verhältnisse zwischen höher- und gegebenenfalls
niedermolekularen Polyhydroxylverbindung und organischem Diisocyanat liegen dabei je nach der gewünschten Härte des Endproduktes zwischen 1 : 1,2 bis etwa 1 : 10, vorzugsweise von
1 : 1,5 bis 1 :5. Ein molares Verhältnis von Polyhydroxylverbindung zu Diisocyanat wie 1 : 1,2 sollte dabei jedoch
nicht unterschritten werden, da sonst die Viskositäten zu
stark ansteigen und sich die Mischungen dadurch nur noch
schlecht verarbeiten lassen. Gegebenenfalls kann die Polyhydroxylverbindung zunächst auch nur mit einem Teil des Diisocyanats oder einem der Diisocyanate zu einem Präpolymeren umgesetzt und der Rest nachträglich zugegeben werden.

Zur Herstellung des Präpolymeren wird die höhermolekulare
Polyhydroxylverbindung wie üblich durch Behandeln bei höheren
Temperaturen und unter vermindertem Druck entwässert, gegebenenfalls mit den niedermolekularen Polyhydroxylverbindungen gemischt und mit dem organischen Diisocyanat umgesetzt.
Bei größeren Ansätzen kann es zweckmäßig sein, zur besseren
Kontrolle der Reaktion das organische Diisocyanat vorzulegen und die Polyhydroxylverbindung kontinuierlich zulaufen zu lassen. In diesem Fall ist es zweckmäßig, die höhermolekulare Polyhydroxylverbindung vorher separat zu entwässern.

Die fertigen NCO-Gruppen haltigen Präpolymeren können direkt nach der Herstellung mit dem 3,3',5,5'-Tetramethyl-4,4'-diamino-diphenylmethan weiterverarbeitet werden, da sie jedoch ausgezeichnete Lagerstabilitäten aufweisen, können sie auch über einen längeren Zeitraum in Abwesenheit von Luftfeuchtigkeit aufbewahrt werden ohne ihre Eigenschaften zu verändern. Falls das NCO-Gruppen haltige Präpolymere nicht direkt nach der Herstellung weiterverarbeitet wird, ist es zweckmäßig, es vor dem Vermischen mit dem Diamin durch eine Vakuumbehandlung bei höheren Temperaturen von gelösten Gasen zu befreien, da man sonst leicht blasige Gießteile erhält. Diese Maßnahme ist beim Gießen kompakter Polyurethane allgemein üblich.

Bei der Umsetzung des Präpolymeren mit dem 3,3',5,5'-Tetramethyl-4,4'-diamino-diphenylmethan sollten ungefähr molar äquivalente Mengen eingesetzt werden, das Verhältnis der Isocyanatgruppen des Präpolymeren zu der Aminogruppe des Härters sollte demnach im allgemein zwischen 0,8 und 1,2, vorzugsweise bei ungefähr 1 : 1 liegen.

Zur Verarbeitung wird das NCO-Gruppen aufweisende Präpolymere bei Temperaturen von 80 bis 120°C, vorzugsweise um 100°C, mit dem vorher aufgeschmolzenen 3,3',5,5'-Tetramethyl-4,4'-diamino-diphenylmethan vermischt, homogenisiert und die gießfähige Mischung in Formen gegossen.

Die Gießteile werden zur Vervollständigung der Reaktion durch mehrstündiges Tempern bei Temperaturen zwischen etwa 80 und 150°C ausgehärtet.

Im allgemeinen ergeben Tempertemperaturen um 100°C die besten Ergebnisse. Die Temperzeit richtet sich vorwiegend nach den dabei angewandten Temperaturen, im allgemeinen sind bei Temperaturen um 100 bis 120°C  2 bis 12 Stunden ausreichend.

Dem Reaktionsgemisch können selbstverständlich auch alle bekannten und üblichen Hilfs- und Zusatzstoffe beigegeben werden, wie Katalysatoren, Verzögerer, Farbstoffe, Pigmente, organische oder mineralische Füllstoffe, Alterungs- oder Hydrolyseschutzmittel.

Die erfindungsgemäß hergestellten Polyurethan-Harnstoff-Elastomeren besitzen neben den bekannt guten mechanischen Eigenschaften dieser Materialien hervorragende Hydrolysebeständigkeiten und Tieftemperatureigenschaften; sie zeichnen sich dabei besonders durch die weitgehende Konstanz ihres Moduls über einen weiten Temperaturbereich aus. Sie sind deshalb für eine Vielzahl von Anwendungsgebieten,beispielsweise zur Herstellung von Maschinenteilen, Rollen, Walzen, Dichtungen ohne Einschränkungen einsetzbar.

Die Erfindung wird in den nachfolgenden Beispielen näher erläutert.

## Beispiel 1

Erfindungsgemäße Umsetzung:

180 g (0,2 Mol) eines handelsüblichen Polytetrahydrofurans (PTHF) mit OH-Endgruppen werden in einem Reaktionsgefäß mit Thermometer und Vakuumverschluß unter Rühren eine Stunde bei 100°C und 20 mm Hg entwässert. Anschließend werden 66,7 g (0,3 Mol) IPDI zugegeben und 2 Stunden bei 100°C zu einem Präpolymeren mit endständigen NCO-Gruppen umgesetzt. Das Präpolymere wird durch Anlegen von Vakuum noch einmal kurz entgast und danach 25,4 g (0,1 Mol) geschmolzenes 3,3',5,5'-Tetramethyl-4,4'-diamino-diphenylmethan eingerührt. Nach der Homogenisierung wird die gießfähige Mischung in vorgeheizte Formen  gegossen und 5 Stunden bei 100°C nachgetempert.

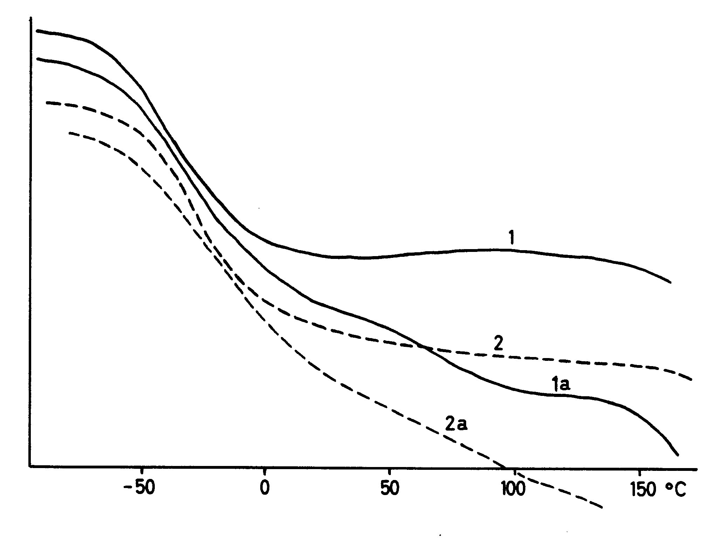

Man erhält klare, durchsichtige Platten, die eine Härte von 85 Shore A (DIN 53 505), eine Reißfestigkeit von 34,3 N/mm$^2$ (DIN 53 504) sowie eine Weiterreißfestigkeit von 48 N/mm (DIN 53 515) aufweisen. Die mit einem automatischen Torsionspendel bei einer Frequenz von 1 Hz gemessene Temperaturabhängigkeit des Schubmoduls ist in der Abbildung (Kurve 1) dargestellt. Die Glastemperatur dieses Materials beträgt -54°C, der Schubmodul ist im technisch wichtigen Bereich zwischen Raumtemperatur und ca. 130°C praktisch unabhängig von der Temperatur, er beginnt erst oberhalb 150°C stärker abzufallen.

Vergleichsversuch 1 a

Man verfährt analog den Angaben von Beispiel 1, verwendet jedoch zur Kettenverlängerung anstelle von 3,3',5,5'-Tetramethyl-diamino-diphenylmethan 19,8 g (0,1 Mol) 4,4'-Diamino-diphenylmethan. Alle anderen Paramter werden konstant gehalten.

Die Härte dieser Probe liegt bei 72 Shore A, die Reißfestigkeit bei 16,3 N/mm$^2$ sowie die Weiterreißfestigkeit bei 21 N/mm.

Die Schubmodulkurve dieses Elastomeren in der Abbildung (Kurve 1 a) zeigt im Gegensatz zur vorstehend beschriebenen erfindungsgemäßen Umsetzung einen kontinuierlichen Abfall des Moduls zwischen dem Glasübergang bei -51°C und dem end-

BASF Aktiengesellschaft — -11- — 0000360

gültigen Erweichen oberhalb 150°C. Das Material ist somit sehr temperaturempfindlich und deshalb für eine allgemeine Anwendung nicht zu gebrauchen.

Vergleichsversuch 1 b

Das Beispiel 1 wird wiederholt, jedoch unter Verwendung von 180 g (0,2 Mol) PTHF, 50,46 g Hexan-1,6-diisocyanat sowie 19,8 g 4,4'-Diaminodiphenylmethan.

Die Reaktivität dieser Mischung ist so hoch, daß sie nach dem Einmischen des Amins nicht mehr von Hand verarbeitet werden kann.

Die Masse erstarrt im Reaktionsgefäß innerhalb weniger Sekunden.

Vergleichsversuch 1 c

Der vorstehend beschriebene Versuch 1 b wird wiederholt unter Verwendung von 180 g (0,2 Mol) PTHF, 42,1 g Hexan-1,6-diisocyanat und 12,7 g 3,3',5,5'-Tetramethyl-4,4'-diamino-diphenylmethan.

Das Resultat ist das gleiche wie im Vergleichsversuch 1 b, die Mischung geliert im Reaktionsgefäß innerhalb weniger Sekunden, so daß die Masse nicht mehr verarbeitbar ist.

Die Vergleichsversuche 1 b und 1 c zeigen, daß aliphatische Diisocyanate für die Herstellung der erfindungsgemäßen Polyurethan-Harnstoff-Elastomeren nicht geeignet sind.

Beispiel 2

Erfindungsgemäße Umsetzung:

283,2 g (0,32 Mol) PTHF werden entwässert und mit 136,2 g eines unter der Bezeichnung ® Hylene W (Firma Dupont) im Handel befindlichen technische Dicyclohexylmethandiisocyanats 2 Stunden bei 110 bis 120°C zu einem Präpolymeren umgesetzt. Anschließend werden 50,8 g geschmolzenes 3,3',5,5'-Tetramethyl-4,4'-diamino-diphenylmethan eingerührt, homogenisiert und die Mischung in vorgeheizte Formen gegossen und 5 Stunden bei 110°C nachgehärtet.

Das Material ergibt zähe und transparente Gießteile, welche eine Härte von 85 Shore A, eine Reißfestigkeit von 12 N/mm$^2$, eine Reißdehnung von 500 % sowie eine Weiterreißfestigkeit von 35 N/mm aufweisen.

Die Schubmodulkurve in der Abbildung (Kurve 2) zeigt analog dem Beispiel 1 einen weiten Temperaturbereich zwischen etwa 0 und 150°C, in dem der Modul nur wenig temperaturabhängig ist.

Vergleichsversuch 2 a

Der Versuch aus Beispiel 2 wird wiederholt unter Verwendung von 180 g (0,2 Mol) PTHF, 78,6 g Dicyclohexylmethandiisocyanat (Hylene W) sowie 19,8 g 4,4'-Diamino-diphenylmethan.

Die Schubmodulkurve in der Abbildung (Kurve (2a) zeigt analog dem Vergleichsversuch 1 a einen kontinuierlichen Abfall des Moduls zwischen -50 und 150°C. Ein Modulplateau tritt hier überhaupt nicht auf. Die thermische Beständigkeit dieses Materials ist demnach ebenfalls ungenügend.

Beispiel 3

Nach der in Beispiel 1 beschriebenen Arbeitsweise wird ein Elastomeres hergestellt unter Verwendung von 180 g (0,2 Mol) PTHF, 55,6 g IPDI sowie 12,7 g 3,3',5,5'-Tetramethyl-4,4'-diamino-diphenylmethan.

Man erhält klare, transparente Platten, die folgende mechanische Eigenschaften aufweisen.

| Härte | 57 | Shore A |
|---|---|---|
| Reißfestigkeit | 16,8 | $N/mm^2$ |
| Weiterreißfestigkeit | 27,4 | N/mm |

Die Glastemperatur dieses Materials beträgt -53°C, der Schubmodul ist zwischen Raumtemperatur und ca. 130°C fast unabhängig von der Temperatur.

Beispiel 4

180 g (0,2 Mol) PTHF werden wie vorstehend beschrieben entwässert und mit 77,8 g IPDI unter Rühren 2 Stunden bei 100°C zu einem Präpolymeren umgesetzt. Die Schmelze wird entgast und bei 100°C 38,5 g geschmolzenes 3,3,5,5'-Tetramethyl-4,4'-diamino-diphenylmethan eingerührt. Die homogenisierte Schmelze wird in vorbereitete Formen gegossen und 5 Stunden bei 100°C nachgetempert. Man erhält transparente Platten mit folgenden mechanischen Eigenschaften:

| Härte | 92 | Shore A |
|---|---|---|
| Reißfestigkeit | 34,9 | $N/mm^2$ |
| Reißdehnung | 420 | % |
| Weiterreißfestigkeit | 56 | N/mm |

Beispiel 5

297,3 (0,15 Mol) eines Polyesters aus Adipinsäure und Äthylenglykol mit einem Molekulargewicht von 1980 werden entwässert und nach der vorstehend beschriebenen Arbeitsweise mit 70,75 g eines unter der Bezeichnung Hylene W im Handel befindlichen technischen Diisocyanato-dicyclohexyl-methans und 29,0 g 3,3',5,5'-Tetramethyl-4,4'-diamino-diphenylmethan zu einem Elastomeren umgesetzt. Man erhält folgende mechnische Eigenschaften:

| Härte | 80 | Shore A |
|---|---|---|
| Reißfestigkeit | 19,4 | $N/mm^2$ |
| Reißdehnung | 670 | % |
| Weiterreißfestigkeit | 42,5 | N/mm |

Die Glastemperatur dieses Materials liegt bei $-32^{o}C$, der Schubmodul ist zwischen Raumtemperatur und $120^{o}C$ konstant.

## Beispiel 6

250 g (0,125 Mol) PTHF vom Molekulargewicht 2 000 werden entwässert und wie vorstehend beschrieben mit 41,65 g Isophorondiisocyanat zu einem Präpolymeren mit endständigen Isocyanatgruppen umgesetzt. Anschließend werden 65,6 g durch Hydrierung von 4,4'-Diamino-diphenylmethan und anschließender Phosgenierung hergestelltes Diisocyanato-dicyclohexylmethan zugegeben und kurz entgast. Bei $100^{o}C$ werden 75,4 g geschmolzenes 3,3',5,5'-Tetramethyl-4,4'-diamino-diphenylmethan eingerührt, die homogenisierte Schmelze in vorgeheizte Formen gegossen und 24 Stunden bei $110^{o}C$ nachgeheizt. Das Material besitzt folgende mechanische Eigenschaften:

| Härte | 97 | Shore A |
|---|---|---|
| | 56 | Shore D |
| Reißfestigkeit | 31,6 | $N/mm^2$ |
| Reißdehnung | 420 | % |
| Weiterreißfestigkeit | 67,4 | N/mm |

Die Glastemperatur dieses Materials beträgt $-72^{o}C$, der Schubmodul ist im Bereich zwischen 0 und $170^{o}C$ praktisch konstant.

## Beispiel 7

300 g (0,15 Mol) PTHF vom Molekulargewicht 2 000 werden entwässert und mit 76,8 Phenylcyclohexylmethan-diisocyanat unter Rühren eine Stunde bei 80 sowie eine Stunde bei 100°C
umgesetzt. Die Schmelze wird entgast und bei dieser Temperatur 36,2 g geschmolzenes 3,3',5,5'-Tetramethy-4,4'-diamino-
diphenylmethan eingerührt, homogenisiert, in vorgeheizte
Formen gegossen und 24 Stunden bei 110°C nachgeheizt. Das
Material besitzt folgende Kenndaten:

| Härte | 88 | Shore A |
|---|---|---|
| Reißfestigkeit | 31,4 | $N/mm^2$ |
| Reißdehnung | 560 | % |
| Weiterreißfestigkeit | 35 | N/mm |

Die Glastemperatur dieses Materials beträgt -72°C, der Schubmodul ist zwischen 0 und 170°C von der Temperatur unabhängig.

Patentansprüche

1. Polyurethan-Harnstoff-Elastomere mit verbessertem Temperaturverhalten, hergestellt durch Umsetzung

   A) eines endständig cycloaliphatisch gebundene NCO-Gruppen aufweisenden Präpolymeren, das seinerseits erhalten wird durch Reaktion von im wesentlichen difunktionellen Polyhydroxylverbindungen mit Molekulargewichten von 600 bis 10 000, gegebenenfalls niedermolekularen Polyhydroxylverbindungen mit Molekulargewichten unter 300 und organischen Diisocyanaten mit mindestens einer cycloaliphatisch gebundenen NCO-Gruppe im Verhältnis von Gesamt-OH-: NCO-Gruppen von 1 : 1,2 bis 1 : 10, mit

   B) 3,3',5,5'-Tetramethyl-4,4'-diamino-diphenylmethan im Molverhältnis von 1 : 0,8 bis 1 : 1,2.

2. Polyurethan-Harnstoff-Elastomere gemäß Anspruch 1, dadurch gekennzeichnet, daß man als organische Diisocyanate Dicyclohexylmethan-diisocyanat und/oder 3-Isocyanatomethyl-3,5,5-trimethylcyclohexylisocyanat verwendet.

3. Verfahren zur Herstellung von Polyurethan-Harnstoff-Elastomeren, dadurch gekennzeichnet, daß man

   A) endständig cycloaliphatisch gebundene NCO-Gruppen aufweisende Präpolymere, erhalten durch Umsetzung überwiegend difunktioneller Polyhydroxylverbindungen mit endständigen Hydroxylgruppen und Molekulargewichten von ungefähr 600 bis 10 000 und gegebenenfalls niedermolekularen Polyhydroxylverbindungen mit Molekulargewichten unter 300 mit organischen Diisocyanaten, die mindestens eine cycloaliphatisch gebundene NCO-Gruppe besitzen, im Verhältnis von Gesamt-OH- : NCO-Gruppen von ungefähr 1 : 1,2 bis 1 : 10, mit

B) 3,3',5,5'-Tetramethyl-4,4'-diamino-diphenylmethan in molaren Mengenverhältnissen von ungefähr 1 : 0,8 bis 1 : 1,2 miteinander vermischt, in Formen gießt und aushärten läßt.

4. Verfahren gemäß Anspruch 3, dadurch gekennzeichnet, daß man als organische Diisocyanate Dicyclohexylmethan-diisocyanat, 3-Isocyanatomethyl-3,5,5-trimethylcyclohexylisocyanat oder deren Mischungen verwendet.

Zeichn.

**Europäisches Patentamt**

# EUROPÄISCHER RECHERCHENBERICHT

Nummer der Anmeldung

EP 78 10 0282

0000360

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 2 159 530 (BAYER)<br><br>* Seite 19-20; Patentansprüche 1,2; Seite 4, Zeilen 17-25 * | 1-4 |
| | FR - A - 1 479 890 (BAYER)<br><br>* Seite 2, rechte Spalte, Absätze 3, 5; Seite 1, rechte Spalte, Absatz 2 * | 1-4 |

**KLASSIFIKATION DER ANMELDUNG (Int. Cl.²)**

C 08 G 18/10
C 08 G 18/32
C 08 G 18/75

**RECHERCHIERTE SACHGEBIETE (Int. Cl.²)**

C 08 G 18/10
C 08 G 18/12
C 08 G 18/32

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 29-09-1978 | VAN PUYMBROECK |